# EUROPÄISCHE PATENTSCHRIFT

(11) **EP 3 682 727 B1**
(45) Veröffentlichungstag und Bekanntmachung des Hinweises auf die Patenterteilung: **25.08.2021**
(21) Anmeldenummer: 19152899.1
(22) Anmeldetag: 21.01.2019
(51) Int. Cl.: A01G 9/029, A01G 31/06

(54) **PFLANZENPALETTE**
PLANT PALETTE
PALETTE POUR PLANTES

(43) Veröffentlichungstag der Anmeldung: 22.07.2020
(73) Patentinhaber: WeGrow Germany GmbH, 47918 Tönisvorst (DE)
(72) Erfinder: Diessenbacher, Peter, 47839 Krefeld (DE)
(74) Vertreter: Dr. Stark & Partner Patentanwälte mbB

(56) Entgegenhaltungen:
- EP-A2- 0 205 330
- WO-A1-2018/229486
- CN-Y- 2 935 786
- KR-U- 20170 001 665
- US-A1- 2016 174 470

## Beschreibung

Die Erfindung betrifft eine Pflanzenpalette mit einer Vielzahl von in Reihen und Spalten angeordneten Nutzen zur Aufnahme von beblätterten kleinen Baum-Jungpflanzen, wobei die Nutzen jeweils einen Nutzenboden mit zumindest einer Entwässerungsöffnung aufweisen, und wobei von jedem Nutzen der Nutzenboden seitlich in eine umlaufende Seitenwandung übergeht und eine Oberseite der Pflanzenpalette durch ineinander übergehende Seitenwände benachbarter Nutzen gebildet ist. Die Seitenwand kann dabei mehrere Seitenflächen umfassen.

Aus der Praxis sind derartige Pflanzenpaletten bekannt, in denen Baum-Jungpflanzen angeordnet werden, die einen unteren Erdbereich sowie einen oberseitigen Trieb umfassen. Der Erdbereich wird in den Nutzen eingesetzt, wobei bei bekannten Pflanzenpaletten die Höhe der Seitenwand in etwa der Höhe des Erdbereichs entspricht. WO 2018/229486 A1 offenbart eine gattungsgemäße Pflanzenpalette mit Nutzen.

Nachteilig hierbei ist, dass ein seitliches Wurzeln durch die Seitenwandung behindert/beeinträchtigt wird, was durch die Erfindung vermieden werden soll.

Diese Aufgabe wird bei einer gattungsgemäßen Pflanzenpalette dadurch gelöst, dass auf der Oberseite sich weiter nach oben erstreckende Vorsprünge derart angeordnet sind, dass sie die Seitenwandungen partiell nach oben fortsetzen. Hierdurch sind die Baum-Jungpflanzen, vor allem im Bereich ihres Erdbereichs, seitlich gestützt und somit gegen Umfallen gesichert, jedoch wird ein seitliches Wurzeln in diesem Bereich nicht oder zumindest weniger behindert/beeinträchtigt.

Dabei erstrecken sich zumindest bei einem Teil der insgesamt vorhandenen Vorsprünge diese einwärts etwas über die Seitenwandung des jeweils entsprechenden Nutzens, so dass die Baum-Jungpflanzen zentriert im Nutzen angeordnet sind und vorzugsweise einen seitlichen Abstand zur Seitenwand bzw. zu jeder Seitenfläche der Seitenwand haben.

Weiterhin setzen sich die einwärts etwas über die Seitenwandung des jeweils entsprechenden Nutzens erstreckenden Vorsprünge entlang der Seitenwandung zumindest über einen Teilbereich der Höhe der Seitenwandung nach unten fort, vorzugsweise reichen sie bis zum Nutzenboden.

Dabei ist auf der Oberseite wenigstens ein, vorzugsweise sind dort auch zumindest zwei verteilt positionierte, besonders bevorzugt in Ecken der Pflanzenpalette angeordnete, sich um ein Vielfaches der Vorsprünge aufwärts erstreckende(r) Abstandshalter vorgesehen. Diese gewährleisten zum einen eine gute Stapelbarkeit, und zum anderen sorgen sie dafür, dass eine umgekippte, kopfüber liegende Pflanzenpalette auf den Abstandshaltern aufliegt und somit keine Last auf den Baum-Jungpflanzen lastet, welche Beschädigungen verursachen könnte.

Zur Montage der Abstandshalter ist die Pflanzenpalette entweder mit auf der Oberseite vorstehend ausgeformten Anbringungselementen versehen, und die Abstandshalter können unterseitig eine entsprechend ausgebildete und mit jeweils einem Anbringungselement formschlüssig zusammenwirkende Anbringungsaussparung zur lösbaren Anbringung des Abstandshalters an einem solchen Anbringungselement aufweisen. Ergänzend oder alternativ kann auch die umgekehrte Ausprägung gegeben sein, bei der die Pflanzenpalette mit in der Oberseite angeordneten und sich nach unten durch die Oberseite hindurch erstreckenden Anbringungsaussparungen versehen ist und die Abstandshalter unterseitig eine entsprechend ausgebildete und mit jeweils einer Anbringungsaussparung formschlüssig zusammenwirkenden Anbringungselementen zur lösbaren Anbringung des Abstandshalters an einer solchen Anbringungsaussparung aufweisen.

Vorzugsweise kann zumindest ein Teil der insgesamt vorhandenen Nutzen einen rechteckigen Querschnitt, vorzugsweise einen quadratischen Querschnitt, aufweisen, so dass eine besonders symmetrische Anordnung der Nutzen möglich ist. Der Querschnitt kann aber auch abweichend sein, beispielsweise dreieckig oder mehreckig.

Vorzugsweise kann der Nutzenboden durch ein Gitter mit zumindest zwei sich kreuzenden Stegen gebildet sein, welche mehrere Entwässerungsöffnungen bilden. Alternativ sind auch andere geeignete Ausprägungen, wie z. B. von außen einwärts weisende Stege, die vor der Mitte enden, möglich. Die Unterkannte der Stege kann gewellt ausgebildet sein, so dass Freiräume für eine Wasserzirkulation gegeben sind.

Vorzugsweise kann zumindest ein Teil der insgesamt vorhandenen Vorsprünge derart angeordnet sein, dass die Vorsprünge gleichmäßig entlang des Umfangs der Seitenwandung des Nutzens, dessen Seitenwandung sie nach oben fortsetzen, verteilt angeordnet sind, so dass eine möglichst gleichmäße Stützung der Baum-Jungpflanzen, vor allem im Bereich ihres Erdbereichs, gegeben ist.

Bei einem bevorzugten Ausführungsbeispiel der Erfindung kann zumindest ein Teil der insgesamt vorhandenen Nutzen mit insgesamt vier gleichmäßig entlang des Umfangs der Seitenwandung des Nutzens angeordneten Vorsprünge versehen sein. Bei einem Nutzen mit einem rechteckigen bzw. quadratischen Querschnitt ist dann an jeder Seitenfläche der Seitenwandung ein Vorsprung vorgesehen. Ein Vorsprung, vorzugsweise jeder Vorsprung zumindest eines Nutzens, ist jeweils mittig in Bezug auf eine Seitenfläche der aus mehreren Seitenflächen bestehenden Seitenwand dieses Nutzens angeordnet.

Bevorzugt kann zumindest bei einem Teil der insgesamt vorhandenen Vorsprünge die Höhe dieser Vorsprünge größer sein als die Höhe der Seitenwandung des Nutzens, an dessen Seitenwand die Vorsprünge angeordnet sind. Dabei kann die Höhe ein Mehrfaches der Höhe der Seitenwandung des Nutzens, an dessen Seitenwand die Vorsprünge angeordnet sind, betragen.

Vorteilhafterweise können für eine gute Stapelbarkeit mehrerer Pflanzenpaletten unterseitig an der Pflanzenpalette Anbringungsaussparungen bzw. Anbringungselemente vorgesehen sein.

Vorzugsweise kann zumindest ein in einer Ecke der Pflanzenpalette angeordneter Abstandshalter derart ausgebildet sein, dass sich sein Querschnitt mit steigendem Abstand zur Oberseite in Richtung zu wenigstens einer, vorzugsweise benachbarten, Ecke der Pflanzenpalette erweitert. Somit kann er platzsparend vorgesehen sein, hat jedoch eine vergrößerte oberseitige Fläche und eine gute Stabilität. Dabei können die Anbringungsaussparungen und die damit formschlüssig zusammenwirkenden Anbringungselemente derart ausgebildet sein, dass ausschließlich eine Anbringung der Abstandshalter in der beabsichtigten Ausrichtung möglich ist. Dies kann beispielsweise durch eine entsprechende Form von Anbringungsaussparungen und Anbringungselementen realisiert sein.

Auch kann zumindest ein Abstandshalter oberseitig mit einer Auflagefläche versehen sein, um somit eine bessere Kraftverteilung zu gewährleisten.

Im einfachsten Fall kann ein Abstandshalter als Stab oder Rohr ausgebildet sein, welches in eine entsprechende Aussparung gesteckt wird. Bei einer Trapezform beispielsweise ist dann auch nur eine Ausrichtung möglich.

Die Erfindung betrifft weiterhin ein System zur Aufnahme von beblätterten kleinen Baum-Jungpflanzen mit zumindest einer Pflanzenpalette. Um die eingangs genannten Nachteile zu vermeiden, soll bei einem derartigen System zumindest eine erfindungsgemäße Pflanzenpalette in einer wasserdichten und zumindest partiell lichtdurchlässigen Schale vorgesehen sein, wobei die Schale oberseitig mit einer lediglich gas- und feuchtigkeitsdurchlässigen Folie verschließbar ist. Diese verhindert das Eindringen von Schädlingen, vorzugsweise auch Mikroorganismen und reguliert zudem auch das Klima innerhalb des durch die Schale sowie die Folie eingeschlossenen Innenraums, in dem die Baum-Jungpflanzen angeordnet sind.

Hierbei können bei bestimmungsgemäßer Benutzung des Systems in der Pflanzenpalette kleine Baum-Jungpflanzen verteilt in den Nutzen angeordnet sein.

Vorteilhafterweise kann die Höhe der Abstandshalter zumindest der zu erwartenden Größe der Baum-Jungpflanzen während der Verweildauer in der Pflanzenpalette entsprechen, so dass die Baum-Jungpflanzen während der Verweildauer durch die höher ausgebildeten Abstandshalter geschützt sind.

Im Folgenden wird ein in der Zeichnung dargestelltes Ausführungsbeispiel der Erfindung erläutert. Es zeigen:
- Fig. 1: eine erfindungsgemäße Pflanzenpalette in perspektivischer Sicht von oben,
- Fig. 2: eine Detailansicht des Gegenstands nach Fig. 1,
- Fig. 3: die Unterseite des Gegenstands nach Fig. 1 in perspektivischer Sicht,
- Fig. 4: eine Detailansicht des Gegenstands nach Fig. 3,
- Fig. 5: einen erfindungsgemäßen Abstandshalter in perspektivischer Sicht von oben,
- Fig. 6: die Unterseite des Gegenstands nach Fig. 1 in perspektivischer Sicht,
- Fig. 7: den Gegenstand nach Fig. 1 mit angebrachten Abstandshaltern und
- Fig. 8: ein erfindungsgemäßes System.

In allen Figuren werden für gleiche bzw. gleichartige Bauteile übereinstimmende Bezugszeichen verwendet.

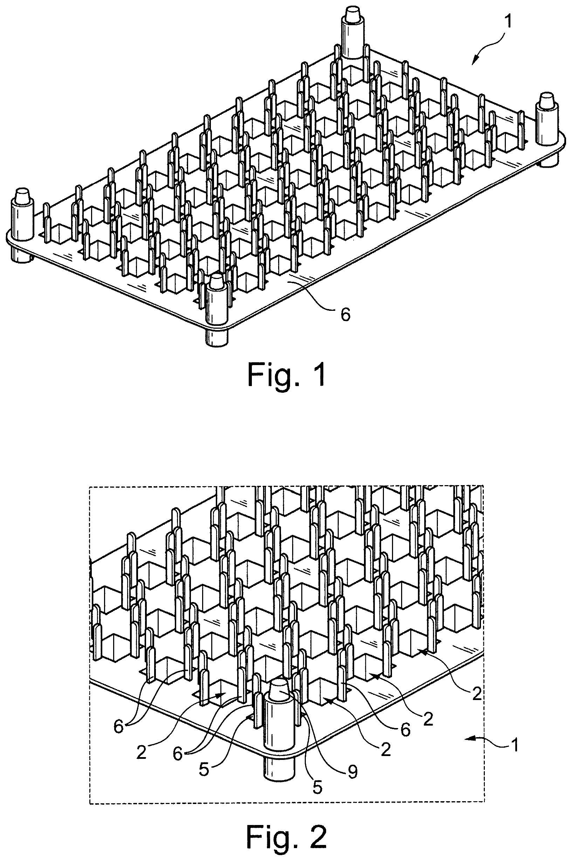

Fig. 1 zeigt eine Pflanzenpalette 1 mit einer Vielzahl von in Reihen und Spalten angeordneten Nutzen 2 zur Aufnahme von beblätterten kleinen Baum-Jungpflanzen, die der Übersichtlichkeit halber nicht dargestellt sind.

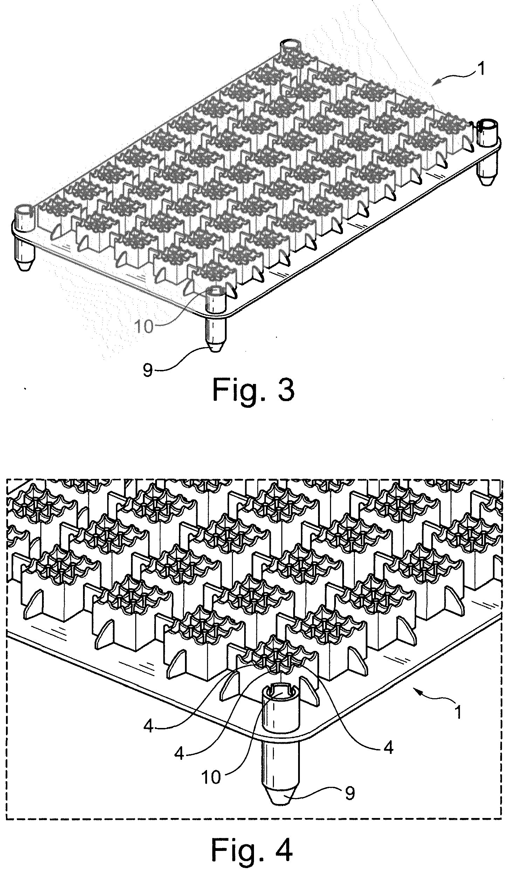

Wie aus den Fig. 3 und 4 ersichtlich, weisen die Nutzen 2 jeweils einen Nutzenboden 3 mit mehreren Entwässerungsöffnungen 4 auf. Hierzu ist der Nutzenboden 3 durch ein Gitter mit vier sich kreuzenden Stegen gebildet, welche neun Entwässerungsöffnungen 4 bilden.

In Fig. 2 ist erkennbar, dass von jedem Nutzen 2 der Nutzenboden 3 seitlich in eine umlaufende Seitenwandung 5 übergeht und eine Oberseite 6 der Pflanzenpalette 1 durch ineinander übergehende Seitenwände 5 benachbarter Nutzen 2 gebildet ist. Die Seitenwand 5 kann dabei mehrere Seitenflächen umfassen.

Auf der Oberseite 6 sind sich weiter nach oben erstreckende Vorsprünge 7 derart angeordnet, dass sie die Seitenwandungen 5 partiell nach oben fortsetzen. Hierdurch sind die Baum-Jungpflanzen, vor allem im Bereich ihres Erdbereichs, seitlich gestützt und somit gegen Umfallen gesichert, jedoch wird ein seitliches Wurzeln in diesem Bereich nicht oder zumindest weniger behindert/beeinträchtigt.

Die vorhandenen Nutzen 2 weisen jeweils einen quadratischen Querschnitt auf, so dass eine besonders symmetrische Anordnung der Nutzen 2 möglich ist.

Dabei sind die Vorsprünge 7 derart angeordnet, dass sie gleichmäßig entlang des Umfangs der Seitenwandung 5 des Nutzens 2, dessen Seitenwandung 5 sie nach oben fortsetzen, verteilt angeordnet sind.

Somit ist an jeder Seitenfläche der Seitenwand ein Vorsprung vorgesehen, der jeweils mittig in Bezug auf die entsprechende Seitenfläche angeordnet ist.

Dabei ist die Höhe der Vorsprünge 7 größer als die Höhe der Seitenwandung 5 der Nutzen 2, im gezeigten Ausführungsbeispiel ungefähr 1,5-fach so groß.

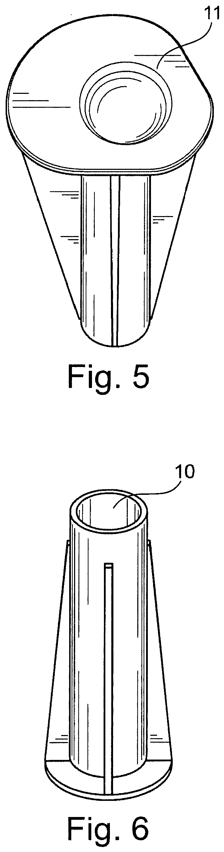

Wie in Fig. 5 gezeigt, sind auf der Oberseite 6 in den Ecken der Pflanzenpalette 1 angeordnete, sich um ein Vielfaches der Vorsprünge 7 aufwärts erstreckende(r) Abstandshalter 8 vorgesehen. Diese gewährleisten zum einen eine gute Stapelbarkeit, und zum anderen sorgen sie dafür, dass eine umgekippte, kopfüber liegende Pflanzenpalette auf den Abstandshaltern 8 aufliegt und somit keine Last auf den Baum-Jungpflanzen lastet, welche Beschädigungen verursachen könnte.

Zur Montage der Abstandshalter 8 ist die Pflanzenpalette 1 mit auf der Oberseite vorstehend ausgeformten Anbringungselementen 9 (vgl. Fig. 2) versehen, und die Abstandshalter 8 weisen unterseitig eine entsprechend ausgebildete und mit jeweils einem Anbringungselement 9 formschlüssig zusammenwirkende Anbringungsaussparung 10 zur lösbaren Anbringung des Abstandshalters 8 an einem solchen Anbringungselement 9 auf (vgl. Fig. 6).

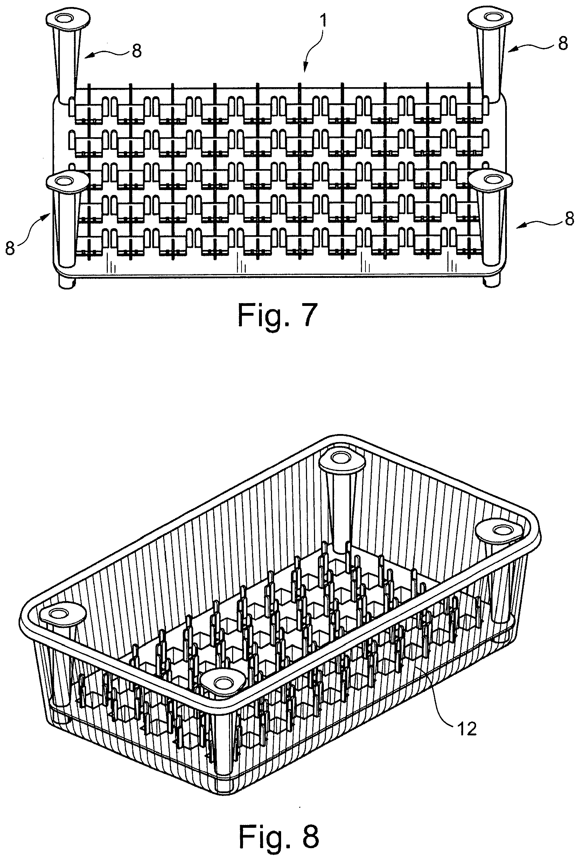

Wie in den Fig. 5 bis 7 gezeigt, sind die Abstandshalter 8 derart ausgebildet, dass sich jeweils ihr Querschnitt mit steigendem Abstand von der Oberseite 6 in Richtung zu allen anderen Ecken der Pflanzenpalette 1 erweitert. Dabei sind die Anbringungsaussparungen 10 und die damit formschlüssig zusammenwirkenden Anbringungselemente 9 derart ausgebildet, dass ausschließlich eine Anbringung der Abstandshalter 8 in der beabsichtigten Ausrichtung möglich ist. Dies ist durch eine entsprechende Form von Anbringungsaussparungen 10 und Anbringungselementen 9 realisiert (vgl. Fig. 2 sowie Fig. 6).

Die Abstandshalter 8 sind oberseitig mit einer Auflagefläche 11 versehen, um somit eine bessere Kraftverteilung zu gewährleisten.

Das erfindungsgemäße System umfasst im gezeigten Ausführungsbeispiel eine Pflanzenpalette 1, die in einer wasserdichten und lichtdurchlässigen Schale 12 vorgesehen ist, wobei die Schale oberseitig mit einer (in der Zeichnung nicht dargestellten) lediglich gas- und feuchtigkeitsdurchlässigen Folie verschließbar ist.

Dabei entspricht die Höhe der Abstandshalter 8 zumindest der zu erwartenden Größe der Baum-Jungpflanzen während der Verweildauer in der Pflanzenpalette 1, so dass die Baum-Jungpflanzen während der Verweildauer durch die höher ausgebildeten Abstandshalter 8 geschützt sind. Auch die Höhe der Schale 12 ist entsprechend gewählt.

Weiterhin entspricht die Höhe der Abstandshalter 8 der Höhe der Schale und schließt somit oberseitig mit dem Rand der Schale 12 ab.

## Patentansprüche

1. Pflanzenpalette (1) mit einer Vielzahl von in Reihen und Spalten angeordneten Nutzen (2) zur Aufnahme von beblätterten kleinen Baum-Jungpflanzen, wobei die Nutzen (2) jeweils einen Nutzenboden (3) mit zumindest einer Entwässerungsöffnung (4) aufweisen, und wobei von jedem Nutzen (2) der Nutzenboden (3) seitlich in eine umlaufende Seitenwandung (5) übergeht und eine Oberseite (6) der Pflanzenpalette (1) durch ineinander übergehende Seitenwände (5) benachbarter Nutzen (2) gebildet ist, **dadurch gekennzeichnet, dass** auf der Oberseite (6) sich weiter nach oben erstreckende Vorsprünge (7) derart angeordnet sind, dass sie die Seitenwandungen (5) partiell nach oben fortsetzen, wobei auf der Oberseite (6) wenigstens ein, vorzugsweise zumindest zwei verteilt positionierte, besonders bevorzugt in Ecken der Pflanzenpalette (1) angeordnete, sich um ein Vielfaches der Vorsprünge (7) aufwärts erstreckende(r) Abstandshalter (8) vorgesehen ist (sind), wobei zumindest bei einem Teil der insgesamt vorhandenen Vorsprünge (7) sich diese einwärts etwas über die Seitenwandung (5) des jeweils entsprechenden Nutzens (2) erstrecken und wobei sich die einwärts etwas über die Seitenwandung (5) des jeweils entsprechenden Nutzens (2) erstreckenden Vorsprünge (7) entlang der Seitenwandung (5) zumindest über einen Teilbereich der Höhe der Seitenwandung (5) nach unten fortsetzen, vorzugsweise bis zum Nutzenboden (3) reichen und wobei weiterhin entweder die Pflanzenpalette (1) mit auf der Oberseite vorstehend ausgeformten Anbringungselementen (9) versehen ist und die Abstandshalter (8) unterseitig eine entsprechend ausgebildete und mit jeweils einem Anbringungselement (9) formschlüssig zusammenwirkende Anbringungsaussparung (10) zur lösbaren Anbringung des Abstandshalters (8) an einem solchen Anbringungselement (9) aufweist und/oder aber die Pflanzenpalette (1) mit in der Oberseite (6) angeordneten und sich nach unten durch die Oberseite (6) hindurch erstreckenden Anbringungsaussparungen (10) versehen ist und die Abstandshalter (8) unterseitig eine entsprechend ausgebildete und mit jeweils einer Aussparung (10) formschlüssig zusammenwirkenden Anbringungselementen (9) zur lösbaren Anbringung des Abstandshalters (8) an einer solchen Anbringungsaussparung (10) aufweisen.

2. Pflanzenpalette (1) nach dem vorhergehenden Anspruch, **dadurch gekennzeichnet, dass** zumindest ein Teil der insgesamt vorhandenen Nutzen (2) einen rechteckigen Querschnitt, vorzugsweise einen quadratischen Querschnitt, aufweist.

3. Pflanzenpalette (1) nach einem der vorhergehenden Ansprüche, **dadurch gekennzeichnet, dass** der Nutzenboden (3) durch ein Gitter mit zumindest zwei sich kreuzenden Stegen gebildet ist, welche mehrere Entwässerungsöffnungen (4) bilden.

4. Pflanzenpalette (1) nach dem vorhergehenden Anspruch, **dadurch gekennzeichnet, dass** zumindest ein Teil der insgesamt vorhandenen Vorsprünge (7) derart angeordnet sind, dass die Vorsprünge (7) gleichmäßig entlang des Umfangs der Seitenwandung (5) des Nutzens (2), dessen Seitenwandung (5) sie nach oben fortsetzen, verteilt angeordnet sind.

5. Pflanzenpalette (1) nach dem vorhergehenden Anspruch, **dadurch gekennzeichnet, dass** zumindest ein Teil der insgesamt vorhandenen Nutzen (2) mit insgesamt vier gleichmäßig entlang des Umfangs der Seitenwandung (5) des Nutzens (2) angeordneten Vorsprüngen (7) versehen sind.

6. Pflanzenpalette (1) nach einem der vorhergehenden Ansprüche, **dadurch gekennzeichnet, dass** zumindest bei einem Teil der insgesamt vorhandenen Vorsprünge (7) die Höhe dieser Vorsprünge (7) größer ist als die Höhe der Seitenwandung (5) des Nutzens (2), an dessen Seitenwand die Vorsprünge (7) angeordnet sind, vorzugsweise ein Mehrfaches der Höhe der Seitenwandung (5) des Nutzens (2), an dessen Seitenwand die Vorsprünge (7) angeordnet sind, beträgt.

7. Pflanzenpalette (1) nach einem der vorhergehenden Ansprüche, **dadurch gekennzeichnet, dass** zumindest ein in einer Ecke der Pflanzenpalette (1) angeordneter Abstandshalter (8) derart ausgebildet ist, dass sich sein Querschnitt mit steigendem Abstand zur Oberseite (6) in Richtung zu wenigstens einer, vorzugsweise benachbarten, Ecke der Pflanzenpalette (1) erweitert.

8. Pflanzenpalette (1) nach einem der vorhergehenden Ansprüche, **dadurch gekennzeichnet, dass** zumindest ein Abstandshalter (8) oberseitig mit einer Auflagefläche (11) versehen ist.

9. System zur Aufnahme von beblätterten kleinen Baum-Jungpflanzen mit zumindest einer Pflanzenpalette (1), **dadurch gekennzeichnet, dass** zumindest eine Pflanzenpalette (1) nach einem der vorhergehenden Ansprüche in einer wasserdichten und zumindest partiell lichtdurchlässigen Schale (12) vorgesehen ist, wobei die Schale (12) oberseitig mit einer lediglich gas- und feuchtigkeitsdurchlässigen Folie verschließbar ist.

10. System mit Pflanzenpalette (1) und darin angeordneten kleinen Baum-Jungpflanzen, **dadurch gekennzeichnet, dass** die Pflanzenpalette (1) nach einem der Ansprüche 1 bis 8 ausgebildet ist.

11. System nach dem vorhergehenden Anspruch, **dadurch gekennzeichnet, dass** die Höhe der Abstandshalter (8) zumindest der zu erwartenden Größe der Baum-Jungpflanzen während der Verweildauer in der Pflanzenpalette (1) entspricht.

## Claims

1. Plant palette (1) with a plurality of compartments (2) arranged in rows and columns for receiving small saplings with leaves, wherein the compartments (2) each comprise a compartment base (3) with at least one water drainage opening (4), and wherein, from each compartment (2), the compartment base (3) transfers laterally into a circumference side wall (5) and an upper side (6) of the plant palette (1) is formed by side walls (5) of adjacent compartments (2) merging into one another, **characterised in that** on the upper side (6) further projections (7) extending upwards are arranged in such a way that they continue to project the side walls (5) partially upwards, wherein, on the upper side (6), at least one and preferably at least two spacing interval elements (8) is/are provided, positioned distributed apart from one another and arranged for particular preference in corners of the plant pallet (1), extending upwards by a distance which is a multiple of the projections (7), wherein, at least with regard to a part of the total of the projections (7) present, these extend inwards somewhat over the side wall (5) of each corresponding compartment (2), and wherein the projections (7), extending inwards somewhat over the side wall (5) of each corresponding compartment (2), continue downwards along the side wall (5), at least over a part region of the height of the side wall (5), preferably reaching as far as the compartment base (3), and wherein, further, either the plant palette (1) is provided with attachment elements (9) formed projecting on the upper side, and the spacing interval elements (8) comprise on the under side a correspondingly formed attachment cutout opening (10) which interacts in positive fit in each case with an attachment element (9), for the releasable attachment of the spacing interval element (8) to such an attachment element (9), and/or, however, the plant palette (1) is provided with attachment cutout openings (10) arranged in the upper side (6) and extending downwards through the upper side (6), and the spacing interval elements (8) comprise on the underside a correspondingly shaped attachment element (9), each interacting in positive fit with a cutout opening (10) for the releasable attachment of the spacing interval element (8) to such an attachment cutout opening (10).

2. Plant palette (1) according to the preceding claim, **characterised in that** at least a part of the total of the compartments (2) provided comprise a rectangular cross-section, preferably a square cross-section.

3. Plant palette (1) according to any one of the preceding claims, **characterised in that** the compartment base (3) is formed by a grid with at least two intersecting webs, which form a plurality of water drainage openings (4).

4. Plant palette (1) according to any one of the preceding claims, **characterised in that** at least a part of the total of the projections (7) present are arranged in such a way that the projections (7) are arranged distributed uniformly along the circumference of the side wall (5) of the container (2), of which the side walls (5) continue upwards.

5. Plant palette (1) according to any one of the preceding claims, **characterised in that** at least a part of the total of compartments (2) present are provided with a total of four projections (7) arranged uniformly distributed along the circumference of the side wall (5) of the container (2).

6. Plant palette (1) according to any one of the preceding claims, **characterised in that** with at least a part of the total of the projections (7) present, the height of these projections (7) is greater than the height of the side wall (5) of the compartment (2) on the side wall of which the projections (7) are arranged, preferably as a multiple of the height of the side wall (5) of the compartment (2) on the side wall of which the projections (7) are arranged.

7. Plant palette (1) according to any one of the preceding claims, **characterised in that** at least one spacing interval element (8) arranged in a corner of the plant palette (1) is configured in such a way that its cross-section widens with an increasing distance interval to the upper side (6) in the direction towards at least one corner of the plant palette (1), preferably adjacent.

8. Plant palette (1) according to any one of the preceding claims, **characterised in that** at least one spacing interval element (8) is provided on its upper side with a contact surface (11).

9. System for receiving small plant saplings with leaves with at least one plant pallet (1), **characterised in that** at least one plant pallet (1) according to any one of the preceding claims is provided in a waterproof and at least partially light-permeable shell (12), wherein the shell (12) can be closed on the upper side with a film which is only permeable to gas and moisture.

10. System with a plant pallet (1) and small plant saplings arranged therein, **characterised in that** the plant palette (1) is configured in accordance with any one of claims 1 to 8.

11. System according to the preceding claim, **characterised in that** the height of the spacing interval element (8) corresponds at least to the expected size of the young saplings during the period spent in the plant palette (1).

## Revendications

1. Palette (1) porte-végétation, munie d'une multiplicité d'alvéoles (2) agencés en des rangées et en des colonnes, conçus pour recevoir des jeunes pousses d'arbres feuillées de petite taille, lesdits alvéoles (2) étant pourvus d'un fond respectif (3) doté d'au moins un orifice de drainage (4), sachant que le fond (3) de chaque alvéole (2) fusionne latéralement dans un cloisonnement latéral (5) périphérique, et qu'une face supérieure (6) de ladite palette (1) porte-végétation est formée par des cloisonnements latéraux (5) d'alvéoles voisins (2) qui fusionnent les uns dans les autres, **caractérisée par le fait que** des protubérances (7), se prolongeant vers le haut, sont disposées sur la face supérieure (6) de façon telle qu'elles marquent partiellement la continuation des cloisonnements latéraux (5) vers le haut ; sachant qu'au moins un, de préférence au moins deux organe(s) d'espacement (8) positionné(s) de manière répartie, placé(s) dans des coins de la palette (1) porte-végétation avec préférence particulière, et dont l'étendue vers le haut représente un multiple de celle desdites protubérances (7), est (sont) prévu(s) sur ladite face supérieure (6) ; sachant que, pour au moins une partie de la totalité des protubérances (7) présentes, celles-ci s'étendent vers l'intérieur, sensiblement au-delà du cloisonnement latéral (5) de l'alvéole (2) respectivement correspondant, lesquelles protubérances (7), s'étendant vers l'intérieur sensiblement au-delà du cloisonnement latéral (5) de l'alvéole (2) respectivement correspondant, se prolongent vers le bas le long dudit cloisonnement latéral (5), au moins sur une région partielle de la hauteur dudit cloisonnement latéral (5), de préférence jusqu'à atteindre le fond (3) dudit alvéole ; et sachant, en outre, que la palette (1) porte-végétation est munie d'éléments (9) de mise en place, ménagés en saillie sur la face supérieure, et que les organes d'espacement (8) comportent, à la face inférieure, un évidement (10) de mise en place qui présente une réalisation correspondante et coopère, par complémentarité de formes, avec un élément respectif (9) de mise en place, en vue de l'implantation libérable de l'organe d'espacement (8) sur un tel élément (9) de mise en place, et/ou bien que ladite palette (1) porte-végétation est dotée d'évidements (10) de mise en place, qui sont pratiqués dans la face supérieure (6) et traversent ladite face supérieure (6) de part en part vers le bas, et que les organes d'espacement (8) comportent, à la face inférieure, des éléments (9) de mise en place présentant une réalisation correspondante et coopérant avec un évidement respectif (10), par complémentarité de formes, en vue de l'implantation libérable de l'organe d'espacement (8) sur un tel évidement (10) de mise en place.

2. Palette (1) porte-végétation selon la revendication précédente, **caractérisée par le fait qu'**au moins une partie de la totalité des alvéoles (2) présents est munie d'une section transversale rectangulaire, préférentiellement d'une section transversale carrée.

3. Palette (1) porte-végétation selon l'une des revendications précédentes, **caractérisée par le fait que** le fond (3) des alvéoles est matérialisé par un treillis comprenant au moins deux membrures s'entrecroisant et formant plusieurs orifices de drainage (4).

4. Palette (1) porte-végétation selon la revendication précédente, **caractérisée par le fait qu'**au moins une partie de la totalité des protubérances (7) présentes est disposée de telle sorte que lesdites protubérances (7) soient uniformément agencées, de manière répartie, le long du pourtour du cloisonnement latéral (5) de l'alvéole (2) dont elles marquent la continuation du cloisonnement latéral (5) vers le haut.

5. Palette (1) porte-végétation selon la revendication précédente, **caractérisée par le fait qu'**au moins une partie de la totalité des alvéoles (2) présents est munie de protubérances (7) au nombre total de quatre, uniformément agencées le long du pourtour du cloisonnement latéral (5) de l'alvéole (2).

6. Palette (1) porte-végétation selon l'une des revendications précédentes, **caractérisée par le fait que**, pour au moins une partie de la totalité des protubérances (7) présentes, la hauteur de ces protubérances (7) est supérieure à la hauteur du cloisonnement latéral (5) de l'alvéole (2) sur la paroi latérale duquel lesdites protubérances (7) sont disposées et mesure, de préférence, un multiple de la hauteur du cloisonnement latéral (5) dudit alvéole (2) sur la paroi latérale duquel lesdites protubérances (7) sont disposées.

7. Palette (1) porte-végétation selon l'une des revendications précédentes, **caractérisée par le fait qu'**au moins un organe d'espacement (8), placé dans un coin de ladite palette (1) porte-végétation, est conçu de telle manière que sa section transversale s'élargisse, au fur et à mesure de l'accroissement de la distance par rapport à la face supérieure (6), en direction d'au moins un coin de ladite palette (1) porte-végétation préférentiellement voisin.

8. Palette (1) porte-végétation selon l'une des revendications précédentes, **caractérisée par le fait qu'**au moins un organe d'espacement (8) est muni d'une surface d'appui (11) à la face supérieure.

9. Système dévolu à la réception de jeunes pousses d'arbres feuillées de petite taille à l'aide d'au moins une palette (1) porte-végétation, **caractérisé par le fait qu'**au moins une palette (1) porte-végétation, conforme à l'une des revendications précédentes, est prévue dans une coque (12) étanche à l'eau et au moins partiellement translucide, laquelle coque (12) peut être obturée, à la face supérieure, par un film perméable uniquement aux gaz et à l'humidité.

10. Système comprenant une palette (1) porte-végétation et des jeunes pousses d'arbres de petite taille logées dans cette dernière, **caractérisé par le fait que** la palette (1) porte-végétation est réalisée conformément à l'une des revendications 1 à 8.

11. Système selon la revendication précédente, **caractérisé par le fait que** la hauteur des organes d'espacement (8) correspond au moins à la taille escomptée des jeunes pousses d'arbres pendant la durée de séjour dans la palette (1) porte-végétation.
